# EUROPEAN PATENT APPLICATION

(11) **EP 2 241 793 A2**
(43) Date of publication of application: **20.10.2010**
(21) Application number: 10250758.9
(22) Date of filing: 13.04.2010
(51) Int. Cl.: F16K 17/04, F16K 37/00

(54) **Valve testing**

(30) Priority: 18.04.2009 GB 0906738
(71) Applicant: Qinetiq Limited Registered Office, London SW1E 6PD (GB)
(72) Inventor: Michel, Fiona Mairi, Dunfermline Fife KY11 2XR (GB)
(74) Representative: Northway, Daniel Robert

(57) **Abstract**

Testing of a safety valve is described in relation to a valve stem (102) biased relative to a valve body, and comprising a rotor (108) mounted helically on said valve stem, and a driver (110) adapted to rotate the rotor. Rotation of the rotor (108) causes an axial force between the valve stem (102) and the rotor (108) and allows the rotor (108) to be moved into and out of engagement. When engaged the rotor (108) can apply a pre-load to the stem, and may provide sufficient force to achieve valve lift. Alternatively a two stage actuator system may be employed, the second stage providing lift after application of the pre-load.

## Description

This invention relates to valve testing. The invention finds particular application in the testing of pressure relief valves, or safety valves.

Pressure relief valves are designed to open automatically at a pre-determined set pressure level of system pressure and to achieve a pressure relieving flow capacity at a specified pressure and temperature above the set point (overpressure) before re-closing at a pressure below the opening point (blowdown).

Pressure relief valves perform an essential role, responding to system conditions to prevent catastrophic failure when other instruments and control systems fail adequately to control process limits. As such pressure relief valves are widely used in a range of industries, an important example of which is the oil and gas exploration and production industry and in petrochemical plants generally.

Given the role they play in ensuring the safety of process systems, pressure relief valves are subject to a number of performance standards, such as BS EN ISO 4126-6:2003: Safety devices for protection against excessive pressure.

Most pressure relief valves contain neither instrumentation nor external operators, and it is extremely desirable to establish an effective program for inspection and maintenance to ensure that they will operate when called upon in emergency situations. Again, a number of published guidelines exist for recommending the basic structure of an effective pressure relief valve inspection and maintenance program.

Regular testing of valves is one of the most important elements of an effective maintenance program. There are many techniques available for conducting pressure relief valve tests. It would be desirable, in a test, to subject the pressure relief valve to the full operating conditions that it is expected to endure. Such a test has the advantage of assuring that all of the operating characteristics of the valve, set pressure, lift and blowdown are acceptable. However, this type of test is often impractical if not impossible.

A commonly used valve test is therefore the bench-testing alternative whereby valves are transported to a central shop, and keeping of test data can be monitored. Removal of the valve from site, transportation and re-installation however, is costly and time consuming, and can result in significant down time in a process plant.

US 4428223 discloses apparatus for valve testing using a hydraulic rig attached to the valve body via a load bearing frame or yolk. A dynamometer is mounted to the yolk to measure the hydraulic force applied.

This arrangement is however cumbersome, and requires careful and time intensive set up of equipment. Alternative approaches include applicant's copending application WO2008/001073 in which an exciter is mounted in series with the valve spring, using resonant enhancement to reduce the force requirements needed to lift the valve member.

Applicant's co-pending application WO 2009/050442 describes a further alternative approach in which a transducer is mounted concentrically about the valve stem to perform a steady state lift or 'static lift' of the valve stem and closure member, thereby enabling the valve set point to be derived simply and accurately. The contents of applicant's copending application WO 2009/050442 are incorporated herein by reference.

A typical test sequence described in application WO 2009/050442 consists of removing the valve cap to expose the top of the valve body, and commonly an adjustment collar, and the valve stem. A transducer is then slid over the exposed portion of the valve stem, to bear against the exterior of the valve body or collar at its base. It will be understood that a valve stem extension may be employed where appropriate, either temporarily or permanently to enable the test sequence to be performed. Optionally a rigid spacer may be located between the base of the transducer, and the part of the valve which it bears against. This simple step results in the transducer being accurately and securely located concentrically with the valve stem. With the stem, or stem extension, passing through and protruding from the top of the transducer, a locking nut is screwed down onto the top of the stem to abut the top of the transducer. The locking nut is tightened so as to preload the valve stem and the transducer without lifting the valve. The transducer is now arranged to provide a compressive force between the valve body and the valve stem. An acoustic emission sensor can be applied near the valve closure member if required, and a pressure sensor applied to a local tapping if appropriate. If no appropriate tapping exists, line pressure values as determined from a control room or other local display can be entered manually.

With the apparatus in place, a ramping a voltage is applied to the transducer by a controller, to produce a steadily increasing force on the valve stem, opposing the biasing force of the spring. As the applied voltage is increased, the force applied, displacement of the valve stem and the line pressure of the valve are monitored. When the applied force reaches a threshold value, the valve lifts. At this point the force provided by the transducer is substantially in equilibrium with the valve spring force, resulting in a so called 'static lift'.

The onset of valve lift is detected by the displacement of the stem, and the values of line pressure and applied force are recorded and supplied back to the processor, where the valve set point is calculated. Alternatively or additionally, the onset of valve lift can be sensed by an acoustic sensor.

It is an object of the present invention to provide improved methods and apparatus for valve testing.

According to one aspect of the invention there is provided a safety valve having a valve stem biased relative to a valve body, said valve further comprising a rotor mounted in helical cooperation with said valve stem, and a driver adapted to rotate the rotor, wherein rotation of the rotor causes an axial force between the valve stem and the rotor.

The driver is adapted to exert substantially no axial force on said rotor in preferred embodiments, and the driver and rotor are preferably adapted to produce a steady state force greater than or equal to said biasing force.

Advantageously, embodiments of this aspect of the invention allow the rotor to move between first state in which the rotor is axially fixed relative to the valve body and a second state in which the motor is free to move axially relative to the valve body. In the first or engaged state, the rotor is axially constrained relative to the valve body, and rotation of the rotor exerts an axial force on said stem to oppose said biasing force. In the second or disengaged state, the rotor is displaceable relative to the valve body, and axial movement of said stem is substantially unconstrained by said rotor. Again this can be used to perform a valve test as a stand alone actuator, or can be used in conjunction with a second actuator, for providing a preload.

Aspects of the invention described above allow a two stage valve test to be performed. In the first stage, a first actuator brings a second actuator into engagement from a disengaged state, which disengaged state allows thermal expansion and contraction without undesirably loading the stem. The engagement may provide a preload, and a second stage then performs a valve displacement test, from which the set point of the valve can be assessed for example. An advantage of such a two stage operation is that each actuator can have different load characteristics, to suit the operation for which it is intended. The first actuator can be selected to provide relatively large displacement, but with limited load generation. The displacement required by the second actuator can be small by virtue of preloading by the first actuator. The second actuator can be selected to have advantageous loading characteristics such as high precision/resolution and quick speed of response, even if displacement is limited, and less than that of the first actuator.

Accordingly, a further aspect of the invention provides a method for testing a safety valve having a valve stem biased relative to a valve body, said method comprising operating a first actuator to provide engagement between a second actuator and the valve stem operating said second actuator to provide a force on said stem relative to said body to oppose said biasing.

A further related aspect provides valve test apparatus for testing a valve having a valve stem biased relative to a valve body, said apparatus comprising a first and second actuators, said first actuator operable to provide engagement between said second actuator and said valve stem, and said second actuator operable to provide a force on said valve stem relative to said body to oppose said biasing

Further aspects and preferred features of the present invention are set out in the accompanying claims.

The invention extends to methods, apparatus and/or use substantially as herein described with reference to the accompanying drawings.

Any feature in one aspect of the invention may be applied to other aspects of the invention, in any appropriate combination. In particular, method aspects may be applied to apparatus aspects, and vice versa.

Preferred features of the invention will now be described by way of example with reference to the accompanying drawings in which:
Figure 1 show valve test apparatus according to one aspect of the invention;
Figures 2 and 3 show the apparatus of figure 1 at different points in an example of a valve test sequence;
Figure 4 shows alternative valve test apparatus;
Figure 5 illustrates a helical cam arrangement;
Figure 6 illustrates a system for maintaining a plurality of valves;

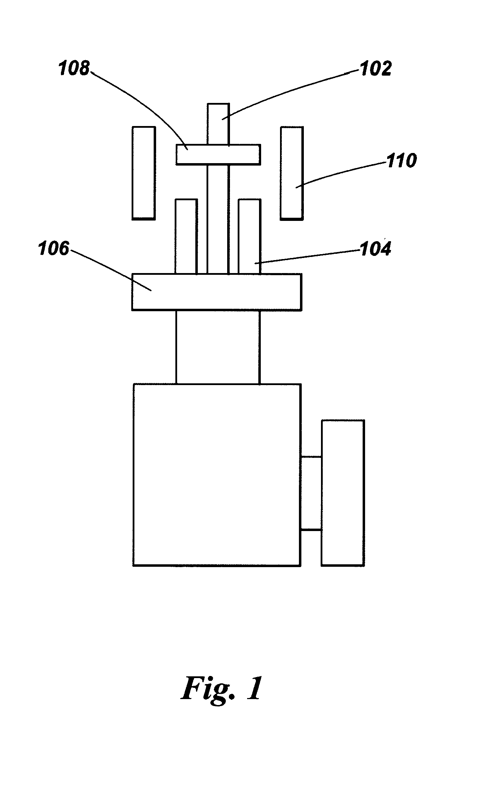

With reference to figure 1, a pressure relief valve is shown with the valve stem 102 exposed, and a valve test actuator 104 mounted concentrically about the valve stem, as described in applicant's aforementioned WO 2009/050442. The actuator 104 rests against the valve body 106, optionally via a rigid spacer. A rotor 108 is mounted coaxially on the valve stem above actuator 104. Here the valve stem is threaded externally, and the rotor is also threaded internally to mate with the valve stem. In Figure 1, the rotor is positioned on the valve stem a short distance above the top of actuator 104, such that the rotor is free to move axially up and down the stem via the application of a rotating force or torque. Conversely, in this position axial movement of the valve stem is not restricted by the rotor, which will simply move up and down together with the stem.

A stator 110 is located around the rotor to form a brushless motor by which torque can be applied to the stator, to drive it against the valve stem. The stator is fixed relative to the valve body 106 and/or the actuator 104, and the arrangement of the rotor and stator is such that the rotor has some axial freedom relative to the stator, to allow it to travel up and down, with the stator providing substantially no axial resistance.

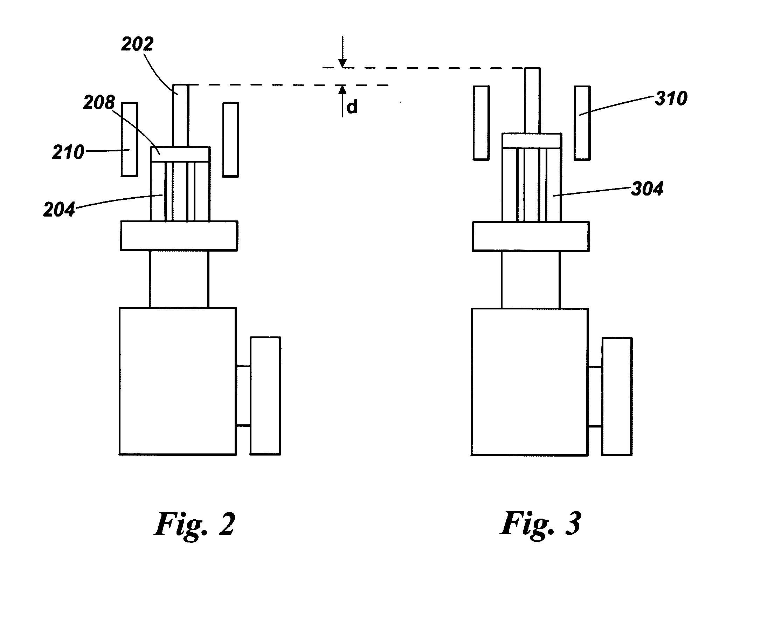

One potential constraint associated with the prior art system and method described in WO 2009/050442 concerns the application of a preload to the valve stem by tightening the locking nut prior to testing the valve. Where actuator 104 is a piezoelectric actuator for example, it is capable of producing only limited displacement, and therefore any 'slack' in the system could adversely affect the performance of a valve test. The application of a preload ensures that any such slack is taken up prior to operation of actuator 104. Similarly, the preload must be removed from the valve stem by loosening the locking nut after testing the valve. A fixed preload should not be maintained during normal operation as this would effectively bias the valve and alter its set point. Even if this bias were compensated for, thermal expansion and contraction of the valve stem in response to environmental conditions could lead to uncompensated forces acting on the stem. Therefore, any preload should be unloaded following completion of a test. Such loading and preloading typically require manual operation, however as will be explained with reference to figure 2, aspects of the present invention offer the advantage of automated, and/or remote preloading and unloading.

Figure 2 shows the same components as figure 1, but with rotor 208 displaced downwards on the stem 202 by an applied torque from stator 210, so as to rest against the top of actuator 204 (possibly via an optional rigid spacer). In this position, rotor 208 is engaged against actuator 204, and hence indirectly against valve body 206. Because further axial displacement is prevented by the reaction force with actuator 204, further torque applied by stator 210 (in the same sense as applied to move the rotor axially downwards) results in an upwards axial force on the valve stem relative to the valve body. This force can be used to preload the valve stem in preparation for a valve test by actuator 204, substantially as described above and in WO 2009/050442, whereby axial expansion of the actuator lifts the valve stem by a displacement d, as shown in Figure 3, and the associated forces required to lift the valve are recorded. The stator 310 is shown to be lifted with the stem by action of actuator 304 in Figure 3, but alternatively the stator could remain fixed relative to the valve body, and allow the stem and rotor to move, providing substantially no axial resistance.

A preload of approximately 500N in the axial direction has been shown to be sufficient for testing commonly encountered valve assemblies as described above. Tests have shown the rotary actuator described can achieve this value, and can provide an axial preload of up to approximately 1.5KN

It will be understood that by driving the rotor in the opposite sense with stator 210, the preload can be removed, and the rotor moved axially back up the stem to a disengaged position, where thermal expansion and contraction of the stem can occur without any force being applied by the rotor to the stem. A stem expansion of 3mm is considered to be the largest encountered in typical installations, and so 3mm or greater of travel is accommodated by the rotor in the disengaged position.

In the above examples, the preload is measured by a load sensor, typically a load cell. This could be a separate component, or could be integrated into either the linear actuator or the rotor. A displacement sensor is also included to detect displacement of the valve stem.

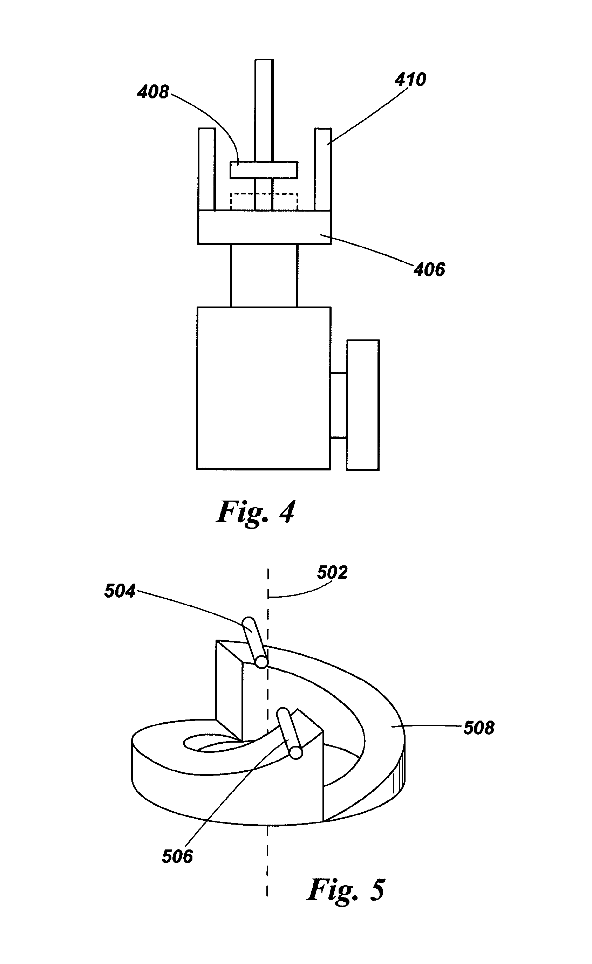

While figures 1 to 3 illustrate valve test apparatus using a linear combination of two actuators - a main linear actuator for performing a static lift valve test, and a rotary actuator for remotely applying and removing a preload - it will be appreciated that a rotary actuator could be used to perform the entire test sequence, as illustrated in Figure 4.

Here the operation is substantially as previously described, but in the absence of any linear actuator. The rotor 408 begins in a default disengaged position, and for performing a test is driven by stator 410 downwardly to a position shown dashed line, to engage with the valve body 406. The reaction force provided by the valve body causes further rotation of the rotor to exert an axial force on the stem relative to the body to oppose the biasing force. In the arrangement of figure 4, the rotary actuator is capable of providing sufficient force and displacement to cause valve lift, and to allow the various set point measurements to be made. Driving of the rotor in the opposite sense releases the axial force on the stem and allows it to close, and subsequently causes the rotor to disengage with the valve body and move up the stem a sufficient distance to the disengaged position, where it can remain for continued normal operation of the valve.

Although this arrangement has fewer components, it is noted that in the case of a failure of the actuator during the valve lift, the valve remains in its open state. In contrast, a two stage arrangement having a piezoelectric or other similar linearly expanding actuator is fail safe, returning the valve to the closed position (albeit possibly preloaded still) in the case of a failure during valve lift. In addition, a piezoelectric or similar actuator can be selected to have very high precision and resolution of applied load, and high speed of response.

In the above examples, the valve stem is threaded, and the rotor has a mating thread on its internal surface, however it will be understood by the skilled person that other arrangements are possible, an example of which is the helical cam illustrated in Figure 5. Here the valve stem (not shown for clarity) defines an axis 502 and has two radially protruding pins 504 and 506. A helical cam 508 has two curved sloping faces which contact the pins at certain angular orientations of the cam. The planar base of the cam can be arranged to rest on a linear actuator in the case of a two actuator system, or on the valve body (optionally indirectly) in the case where the rotary actuator is to perform a complete valve lift test.

With the cam at a first angular position, the sloping cam faces are arranged such that the pins are axially separated from the cam faces. In this disengaged state, axial movement of the stem, and hence pins, is possible without interference with the cam assembly. When the cam is sufficiently rotated, the cam faces come into contact with the pins and can exert a force on the stem to oppose the valve biasing, either to apply a preload, or to perform a valve lift. The cam can be arranged as a rotor and driven as part of a brushless motor including a stator as described above. Alternative drive arrangements include hydraulic or compressed air motors for example.

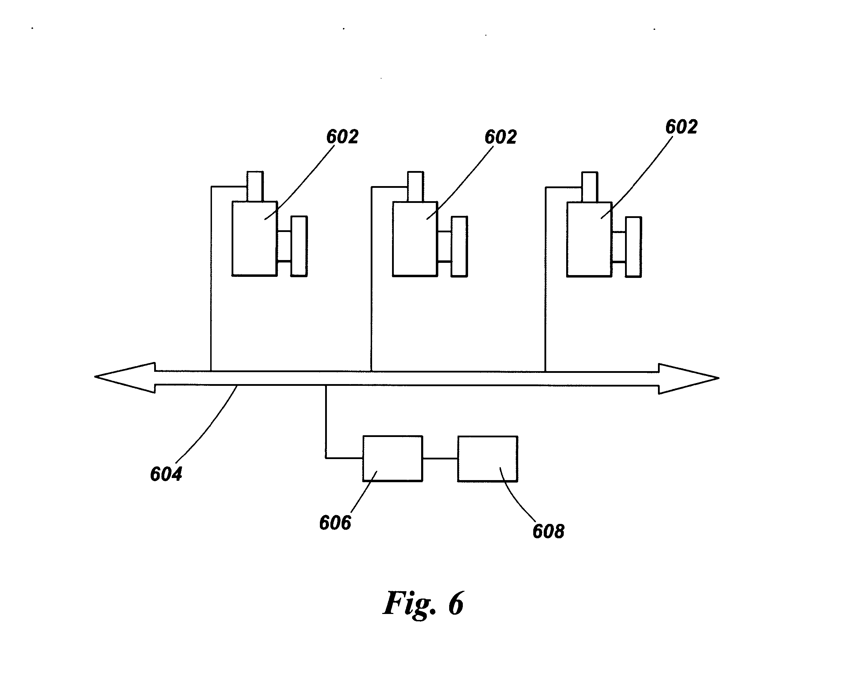

The present invention may be embodied in an installation including a number of valves, some or all of which include permanently integrated test apparatus. A multiple valve monitoring system is illustrated in Figure 6. A set of valves 602 of a plant or installation each includes valve measuring or monitoring apparatus, for example as described above with respect to Figure 1. Each valve is connected to an information bus 604, which may be a dedicated valve monitoring bus, or may be an existing plant wide bus for example. Also communicating with the bus is a controller 606 and optionally a user interface 608. In operation, the controller can initiate a test sequence, including engagement, the application of a preload, and subsequent disengagement in any or all of the valves in the set.

The controller can carry out a valve test of individual or groups of valves as required by a user, and/or can carry out tests periodically as part of an automatic maintenance operation, without human intervention.

There has been described herein the concept of valve test apparatus for applying an axial load to a valve stem, said apparatus comprising a rotor adapted for helical cooperation with the valve stem, and a stator adapted to produce a rotational force on said rotor, said rotational force being converted to axial force by way of said helical cooperation. The rotor and stator are preferably axially displaceable relative to each other

This concept provides a rotary actuator with the capability to perform automated loading, or preloading of the valve stem against the biasing force. Displacements of 2mm or greater or 5mm or greater are possible with embodiments of such apparatus, using helical cams or screw threads for example. Furthermore, when a force is not required to be applied, the apparatus according to some embodiments of the concept can be operated to disengage with the valve stem. The displacements achievable, using helical cams or screw threads for example, are those commensurate with providing adequate operating clearance and accommodating thermal expansion and contraction experienced due to environmental variation.

Apparatus according to this concept can be used to perform a static lift valve test, or can be used in conjunction with a linear actuator to provide a preloading and unloading function. In both cases, the apparatus preferably includes a sensor for measuring the axial load, such as a load cell , and preferably also a sensor for measuring displacement of the valve stem, such as a strain gauge or linear variable differential transformer (LDVT).

Where the rotary actuator is used to provide a preload, a linear actuator is preferably provided for applying an axial load to the valve stem in series with said rotor. The linear actuator is ideally a steady state or monolithic actuator, preferably a piezoelectric or magnetostrictive actuator. Shape Memory Alloys (SMAs) could also be envisaged. The linear actuator is preferably mounted concentrically about said valve stem.

The stator and rotor comprise a brushless electric motor in some embodiments. Alternative arrangements for applying torque to the rotor include hydraulic or compressed air motors for example, or a piezoelectric motor.

It will be understood that the present invention has been described above purely by way of example, and modification of detail can be made within the scope of the invention.

Each feature disclosed in the description, and (where appropriate) the claims and drawings may be provided independently or in any appropriate combination.

## Claims

1. A safety valve having a valve stem biased relative to a valve body, said valve further comprising:
a rotor mounted in helical cooperation with said valve stem, and
a driver adapted to rotate the rotor,
wherein rotation of the rotor causes an axial force between the valve stem and the rotor.

2. A safety valve according to Claim 1, wherein the rotor has an engaged state in which the rotor is axially constrained relative to the valve body, and rotation of the rotor exerts an axial force on said stem to oppose said biasing force.

3. A safety valve according to Claim 1 or Claim 2, wherein the rotor has a disengaged state in which the rotor is displaceable relative to the valve body, and axial movement of said stem is substantially unconstrained by said rotor.

4. A safety valve according to any one of Claims 1 to 3, further comprising a sensor for measuring said axial force.

5. A safety valve according to any preceding claim, further comprising a sensor for detecting displacement of the valve stem.

6. A safety valve according to any preceding claim, further comprising a linear actuator for providing an axial force on said valve stem, in series with said rotor.

7. A safety valve according to Claim 6, wherein said linear actuator is a solid state actuator, preferably a piezoelectric actuator.

8. A method for testing a safety valve having a valve stem biased relative to a valve body, said method comprising:
operating a first actuator to provide engagement between a second actuator and the valve stem; and
operating said second actuator to provide a force on said stem relative to said body to oppose said biasing.

9. A method according to Claim 8, wherein said engagement provides a preload on said stem relative to said body.

10. A method according to Claim 8 or Claim 9, wherein operating said first actuator does not displace the valve stem substantially.

11. A method according to any one of Claims 8 to 10, wherein said first actuator includes a helical coupling to convert rotational force to axial force.

12. A method according to any one of Claims 8 to 11, wherein operating said second actuator displaces the valve stem.

13. A method according to any one of Claims 8 to 12, wherein said second actuator is a linear actuator.

14. A method according to Claim 13, wherein said second actuator is a solid state actuator, preferably a piezoelectric actuator.

15. A method according to any one of Claims 8 to 14, further comprising operating said first actuator to disengage the valve stem from the second actuator.
